# EUROPEAN PATENT APPLICATION

(11) **EP 4 738 807 A1**
(43) Date of publication of application: **06.05.2026**
(21) Application number: 25174193.0
(22) Date of filing: 05.05.2025
(51) Int. Cl.: H04N 1/00, G06T 7/00, B41F 33/00, G01N 21/88, G06F 3/12

(54) **INFORMATION PROCESSING SYSTEM, PROGRAM, AND INFORMATION PROCESSING METHOD FOR INSPECTING GROUPS OF PAGES OF PRINTED DOCUMENTS**

(30) Priority: 30.10.2024 JP 2024190979
(71) Applicant: FUJIFILM Business Innovation Corp., Minato-ku Tokyo (JP)
(72) Inventor: KIKUMOTO, Takashi, Yokohama-shi, Kanagawa (JP); OHIRA, Yoshie, Yokohama-shi, Kanagawa (JP); ISHIKAWA, Shogo, Yokohama-shi, Kanagawa (JP); OHKAWA, Kazuhiro, Yokohama-shi, Kanagawa (JP)
(74) Representative: Becker Kurig & Partner Patentanwälte mbB

(57) **Abstract**

An information processing system includes a processor configured to: acquire correspondence information in which a page number assigned to image data and a region in the image data are associated with each other; acquire scan data obtained by reading a printed matter; and in a case where the scan data includes a first page group and a second page group, set a region in which an inspection is to be executed in a scan image included in the first page group based on a page number in the first page group, which is assigned to the scan image included in the first page group, and the correspondence information, and set a region in which an inspection is to be executed in a scan image included in the second page group based on a page number in the second page group, which is assigned to the scan image included in the second page group, and the correspondence information.

## Description

### BACKGROUND OF THE INVENTION

### (i) Field of the Invention

The present invention relates to an information processing system, a program, and an information processing method.

### (ii) Description of Related Art

As an inspection apparatus that inspects a printed matter, there is an inspection apparatus that can set a region to be inspected (hereinafter, referred to as an "inspection region") in units of pages in accordance with a layout of a page that is an inspection target. The arrangement of the inspection regions on the page is referred to as a "pattern". The pattern used for the inspection of the printed matter is designated for each print job corresponding to the printed matter.

### SUMMARY OF THE INVENTION

As an inspection apparatus that can set a pattern used for the inspection, there is an inspection apparatus that can issue an instruction on repetition of the inspection in an arrangement order of a plurality of patterns. In this type of the apparatus, the pattern used for the inspection is switched in accordance with a serial number starting from a front page of the print job corresponding to the printed matter that is the inspection target.

There is also a print job in which a period in which the pages with the same layout appear changes irregularly. For example, in a transaction specification, the number of pages assigned to each destination in the print job may increase or decrease in accordance with the number of transactions. In a case where the inspection with the pattern is repeatedly designated for this type of the print job, a deviation occurs between the layout of the page that is the inspection target and the pattern to be used for the inspection. In addition, in a case where the number of destinations is large, it is difficult to set the inspection region for each destination.

An object of the present invention is to provide a technique capable of setting an inspection region for a printed matter in which pages with the same layout appear at irregular periods, unlike a case where a pattern of an inspection region used for inspecting a printed matter is switched only by a serial number starting from a front page of the printed matter.

According to a first aspect of the present disclosure, there is provided an information processing system including: a processor configured to: acquire correspondence information in which a page number assigned to image data and a region in the image data are associated with each other; acquire scan data obtained by reading a printed matter; and in a case where the scan data includes a first page group and a second page group, set a region in which an inspection is to be executed in a scan image included in the first page group based on a page number in the first page group, which is assigned to the scan image included in the first page group, and the correspondence information, and set a region in which an inspection is to be executed in a scan image included in the second page group based on a page number in the second page group, which is assigned to the scan image included in the second page group, and the correspondence information.

According to a second aspect of the present invention, in the information processing system according to the first aspect, the processor may be configured to: acquire a setting of the number of copies of at least any one of the first page group or the second page group; and set the region in which the inspection is to be executed in the scan image included in at least any one of the first page group or the second page group based on the acquired setting of the number of copies.

According to a third aspect of the present invention, in the information processing system according to the second aspect, the processor may be configured to: in a case where the scan data does not include the first page group and the second page group, set a region in which an inspection is to be executed in a scan image included in the scan data based on a page number in the scan data, which is assigned to the scan image included in the scan data, and the correspondence information.

According to a fourth aspect of the present invention, in the information processing system according to the first aspect, the processor may be configured to: in a case where the scan data does not include the first page group and the second page group, set a region in which an inspection is to be executed in a scan image included in the scan data based on a page number in the scan data, which is assigned to the scan image included in the scan data, and the correspondence information.

According to a fifth aspect of the present disclosure, there is provided an information processing system including: a processor configured to: acquire correspondence information in which a page number assigned to image data and a region in the image data are associated with each other; acquire scan data obtained by reading a printed matter and including a first page group and a second page group; receive an input of a user; and in a case of setting a region in which an inspection is to be executed in a scan image included in the scan data, vary whether to set the region in which the inspection is to be executed, based on a page number in the scan data and the correspondence information or to set the region in which the inspection is to be executed, based on a page number in the first page group or the second page group and the correspondence information, in accordance with the received input of the user.

According to a sixth aspect of the present invention, in the information processing system according to any one of the first to fifth aspects, a print job corresponding to the printed matter may be a print job in a data stream format, a print job in which a plurality of print jobs are combined, a print job accompanied by switching of paper in units of delimiters in data, or a print job of a document file including a bookmark structure.

According to a seventh aspect of the present disclosure, there is provided a program causing a computer to implement: a function of acquiring correspondence information in which a page number assigned to image data and a region in the image data are associated with each other; a function of acquiring scan data obtained by reading a printed matter; and a function of, in a case where the scan data includes a first page group and a second page group, setting a region in which an inspection is to be executed in a scan image included in the first page group based on a page number in the first page group, which is assigned to the scan image included in the first page group, and the correspondence information, and setting a region in which an inspection is to be executed in a scan image included in the second page group based on a page number in the second page group, which is assigned to the scan image included in the second page group, and the correspondence information.

According to an eighth aspect of the present disclosure, there is provided an information processing method including: acquiring correspondence information in which a page number assigned to image data and a region in the image data are associated with each other; acquiring scan data obtained by reading a printed matter; and in a case where the scan data includes a first page group and a second page group, setting a region in which an inspection is to be executed in a scan image included in the first page group based on a page number in the first page group, which is assigned to the scan image included in the first page group, and the correspondence information, and setting a region in which an inspection is to be executed in a scan image included in the second page group based on a page number in the second page group, which is assigned to the scan image included in the second page group, and the correspondence information.

According to the first aspect of the present disclosure, an inspection region may be set for a printed matter in which pages with the same layout appear at irregular periods, unlike a case where a pattern of an inspection region used for inspecting a printed matter is switched only by a serial number starting from a front page of the printed matter.

According to the second aspect of the present disclosure, the number of copies may be set for each delimiter on the data included in the print job.

According to the third aspect of the present disclosure, the printed matter may be inspected even in a case where a plurality of page groups are not included.

According to the fourth aspect of the present disclosure, it is possible to perform the inspection of the printed matter even in a case where a plurality of page groups are not included.

According to the fifth aspect of the present disclosure, the inspection region may be set for the printed matter in which the pages with the same layout appear at irregular periods, unlike a case where a pattern of the inspection region used for inspecting the printed matter is switched only by the serial number starting from the front page of the printed matter.

According to the sixth aspect of the present disclosure, the inspection of the printed matter corresponding to various print jobs including the delimiter may be performed.

According to the seventh aspect of the present disclosure, the inspection region may be set for the printed matter in which the pages with the same layout appear at irregular periods, unlike a case where a pattern of the inspection region used for inspecting the printed matter is switched only by the serial number starting from the front page of the printed matter.

According to the eighth aspect of the present disclosure, the inspection region may be set for the printed matter in which the pages with the same layout appear at irregular periods, unlike a case where a pattern of the inspection region used for inspecting the printed matter is switched only by the serial number starting from the front page of the printed matter.

### BRIEF DESCRIPTION OF THE DRAWINGS

Exemplary embodiment(s) of the present invention will be described in detail based on the following figures, wherein:
Fig. 1 is a diagram showing a configuration example of a printed matter inspection system assumed in an exemplary embodiment;
Fig. 2 is a diagram showing a configuration example on hardware of an inspection apparatus used in the exemplary embodiment;
Fig. 3 is a diagram showing functional units provided in the inspection apparatus used in the exemplary embodiment;
Fig. 4 is a diagram showing a report;
Fig. 5 is a diagram showing an example of a pattern;
Fig. 6 is a diagram showing an example of a display of a pattern setting screen;
Fig. 7 is an example of a flowchart showing a processing operation executed by the inspection apparatus;
Fig. 8 is a diagram showing a relationship between a page and a pattern in a setting example 1 to a setting example 3;
Fig. 9 is a diagram showing a relationship between a page and a pattern in a setting example 4 and a setting example 5;
Fig. 10 is a diagram showing a relationship between a page and a pattern in a setting example 6 and a setting example 7;
Fig. 11 is a diagram showing a relationship between a page and a pattern in a setting example 8 and a setting example 9; and
Fig. 12 is a diagram showing a relationship between a page and a pattern in a setting example 10.

### DETAILED DESCRIPTION OF THE INVENTION

Hereinafter, exemplary embodiments of the present invention will be described with reference to the accompanying drawings.

### <Exemplary Embodiment 1>

### <System Configuration>

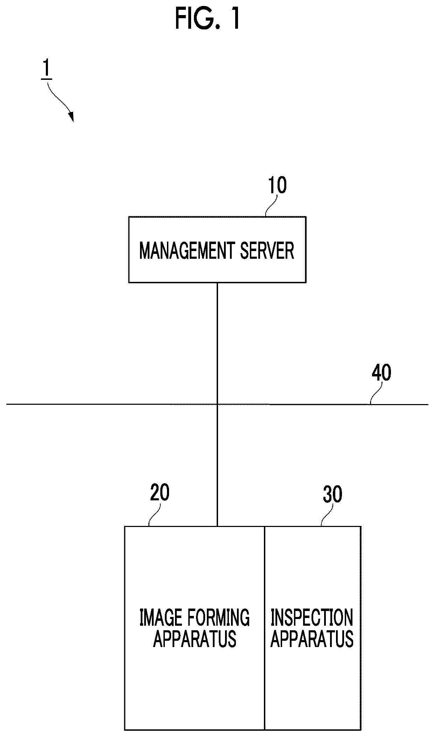

Fig. 1 is a diagram showing a configuration example of a printed matter inspection system 1 assumed in the exemplary embodiment. The printed matter inspection system 1 is an example of an information processing system.

The printed matter inspection system 1 includes a management server 10, an image forming apparatus 20, an inspection apparatus 30, and a network 40. In the present exemplary embodiment, the network 40 is a local area network (LAN). The LAN may be either a wired line or a wireless line. However, the network 40 may be either a dedicated line or a mobile communication system, such as 4G or 5G.

The management server 10 is a computer that manages a print job. The print job is a unit of print processing, and is also a unit of management. The management server 10 supplies print data corresponding to the print job to the image forming apparatus 20. The print data is page description language (PDL) data.

The image forming apparatus 20 is an apparatus that forms an image on paper in accordance with the print data. The paper may be either cut paper or roll paper. However, in the present exemplary embodiment, it is assumed that the cut paper is used.

The inspection apparatus 30 is an apparatus that inspects a printed matter. The printed matter refers to paper on which the image corresponding to the print job output by the image forming apparatus 20 is formed. In the inspection apparatus 30, the presence or absence of defects such as stains and misregistration in an inspection region designated in advance is inspected.

### <Apparatus Configuration>

### <Management Server>

The management server 10 includes a processor, a read-only memory (ROM), a random-access memory (RAM) used as a work area of the processor, an auxiliary storage device, a monitor, and a communication interface. The respective devices are connected via a bus or another signal line.

The processor is a device that implements various functions through execution of a program. The program here is a general term for an operating system (OS) or an application program. For example, the processor provides a management function of the print job to a user through the execution of the program. A management screen for the print job is displayed on the monitor. Various types of information related to the print job being managed are displayed on the management screen. On the management screen, the inspection region can be set for each print job. On the management screen, it is also possible to check an inspection result of the inspection apparatus 30.

The auxiliary storage device is configured with, for example, a hard disk device or a semiconductor storage. The auxiliary storage device stores, for example, the program and the print job. In the present exemplary embodiment, the print job is PDL data, line conditioned data stream (LCDS) data, or intelligent printer data stream (IPDS) data.

The communication interface is used for communication with the image forming apparatus 20, the inspection apparatus 30, and the like.

### <Image Forming Apparatus>

The image forming apparatus 20 includes a processor, a ROM, a RAM used as a work area of the processor, an auxiliary storage device, an image processing unit, a printing unit, and a communication interface. The respective devices are connected via a bus or another signal line. The image forming apparatus 20 is also provided with a mechanism for accommodating paper and a mechanism for transporting paper.

The processor controls an operation of each device through execution of firmware and forms the image corresponding to the print data.

The auxiliary storage device is configured with, for example, a hard disk device or a semiconductor storage. The auxiliary storage device stores the print data received from the management server 10, in addition to the firmware.

The image processing unit executes, for example, processing of converting page description language (PDL) data described in a page description language into raster image processor (RIP) data. For example, the printing unit is a mechanism unit that forms an image on paper using an electrophotographic method or an ink jet method.

The communication interface is used for communication with the management server 10, the inspection apparatus 30, and the like.

### <Inspection Apparatus>

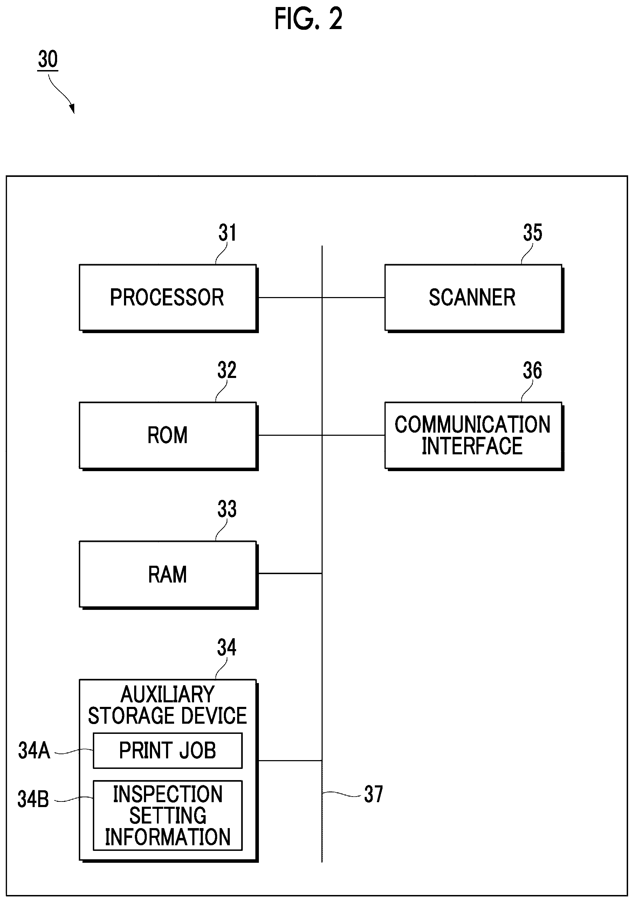

Fig. 2 is a diagram showing a configuration example on hardware of the inspection apparatus 30 used in the exemplary embodiment.

The inspection apparatus 30 includes a processor 31, a ROM 32, a RAM 33 used as a work area of the processor, an auxiliary storage device 34, a scanner 35, and a communication interface 36. The respective devices are connected via a bus or another signal line 37.

The processor 31 inspects the printed matter through the execution of the firmware.

The auxiliary storage device 34 is configured with, for example, a hard disk device or a semiconductor storage. The auxiliary storage device 34 stores a print job 34A and inspection setting information 34B received from the management server 10, in addition to the firmware.

The inspection setting information 34B is setting information for defining the inspection of the printed matter. In the present exemplary embodiment, the inspection setting information 34B is set through the management screen displayed on the monitor of the management server 10 (see Fig. 1).

However, in a case where the inspection apparatus 30 is provided with a monitor, the inspection setting information 34B may be set through a setting screen displayed on the monitor of the inspection apparatus 30. In a case where the image forming apparatus 20 is provided with a monitor, the inspection setting information 34B may be set through a setting screen displayed on the monitor of the image forming apparatus 20.

The inspection setting information 34B includes a pattern used for the inspection, a correspondence relationship between a page and a pattern, whether or not the correspondence relationship between the page and the pattern is repeated, whether or not the application is performed for each report, and the like.

The scanner 35 is a device that optically reads an image of a surface of paper, and outputs the image as image data. Hereinafter, an image group that is optically read is referred to as "scan data", and an image included in the scan data is referred to as a "scan image". The scanner 35 is provided on a paper transport path. In a case of the present exemplary embodiment, the reading of the image using the scanner 35 is executed immediately after the image is formed by the image forming apparatus 20.

The communication interface 36 is used for communication with the management server 10, the image forming apparatus 20, and the like.

### <Functional Configuration>

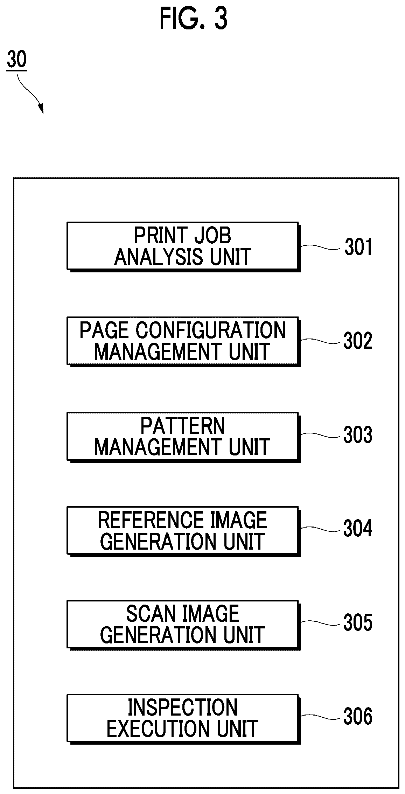

Fig. 3 is a diagram showing functional units provided in the inspection apparatus 30 used in the exemplary embodiment. The functional units shown in Fig. 3 are implemented through the execution of the firmware by the processor 31.

Fig. 3 shows, as the functional units provided in the inspection apparatus 30, a print job analysis unit 301, a page configuration management unit 302, a pattern management unit 303, a reference image generation unit 304, a scan image generation unit 305, and an inspection execution unit 306.

The print job analysis unit 301 is a functional unit that analyzes the print job 34A (see Fig. 2) and extracts information related to a report. The report is an example of a delimiter on the data in the print job 34A. The delimiter on the data refers to one or a plurality of data sections of the print data.

The print job analysis unit 301 according to the present exemplary embodiment provides the number of reports, the number of pages of the report, and the like to the page configuration management unit 302 as a page configuration of the print job 34A. In the present exemplary embodiment, the number of pages constituting the report may be different, but the layout of the pages is basically common between the reports.

For example, in a case where the print job 34A is billing data, the billing data for each billing destination is the report. For example, each of the billing data corresponding to a billing destination A and the billing data corresponding to a billing destination B is the report. For example, the first page of each report is configured by a layout including a destination, and the second and subsequent pages of each report are configured by one or a plurality of layouts in accordance with a format of the specification. A plurality of scan images corresponding to each report are examples of a first page group and a second page group.

In a case where the print job 34A is a job in which a plurality of print jobs are combined, each print job is the report. In a case where the print job 34A includes a setting of switching of the paper, a data portion in which the setting of the paper is different is the report. In a case where the print job 34A is a portable document format (PDF) file, a data portion separated by a bookmark is the report. In a case of the present exemplary embodiment, a data portion divided by the bookmark is managed in units of pages. The PDF file is an example of a document file.

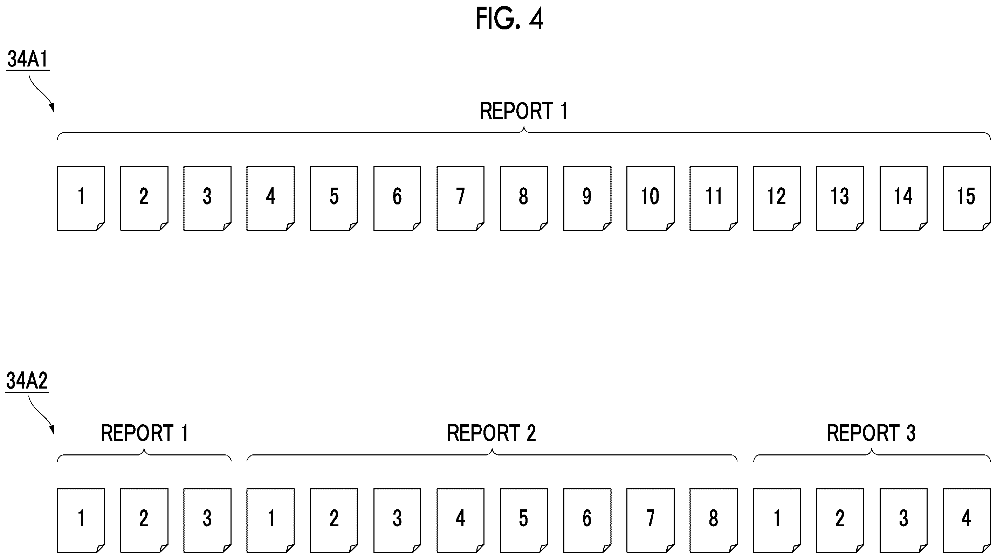

Fig. 4 is a diagram showing the report. Fig. 4 shows print jobs 34A1 and 34A2 of a data stream system. The print job 34A of the data stream system includes, for example, line conditioned data stream (LCDS) and intelligent printer data stream (IPDS).

The number of reports of the print job 34A1 is one, and the number of reports of the print job 34A2 is three.

Each page of the print jobs 34A1 and 34A2 shown in Fig. 4 is assigned with a serial number in units of reports.

For example, in the print job 34A1, the numbers "1" to "15" are assigned to 15 pages.

For example, in the "report 1" of the print job 34A2, the numbers "1" to "3" are assigned to three pages. In the "report 2" that is the second order, the numbers "1" to "8" are assigned to eight pages. In the "report 3" that is the third order, the numbers "1" to "4" are assigned to four pages.

The page configuration management unit 302 (see Fig. 3) is a functional unit that manages the page configuration of the print job 34A (see Fig. 2) and the inspection result of each page. The page configuration management unit 302 also has a function of instructing the inspection execution unit 306 to execute the inspection.

The pattern management unit 303 is a functional unit that manages the pattern of the inspection region for each page.

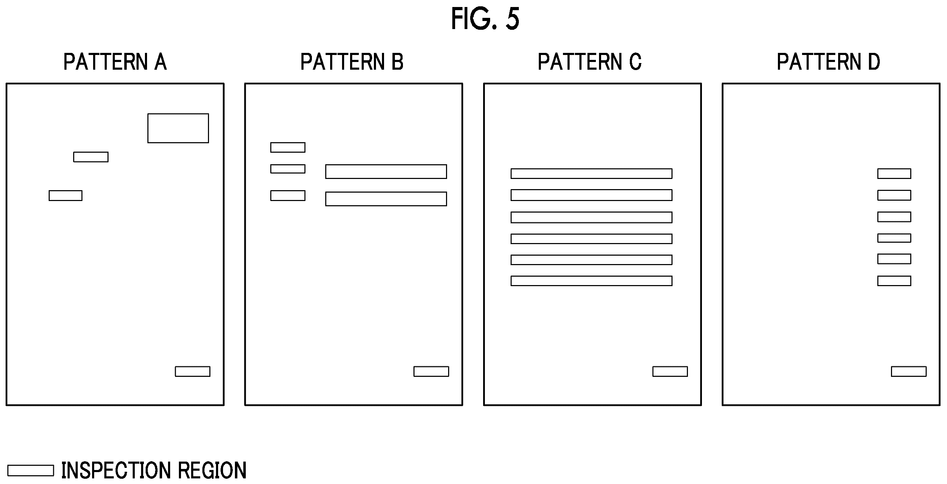

Fig. 5 is a diagram showing an example of the pattern. Fig. 5 shows four patterns. It goes without saying that the number of patterns is an example. The inspection region used for inspecting the printed matter is set, for example, through an operation screen. In Fig. 5, the four patterns are represented as a "pattern A", a "pattern B", a "pattern C", and a "pattern D".

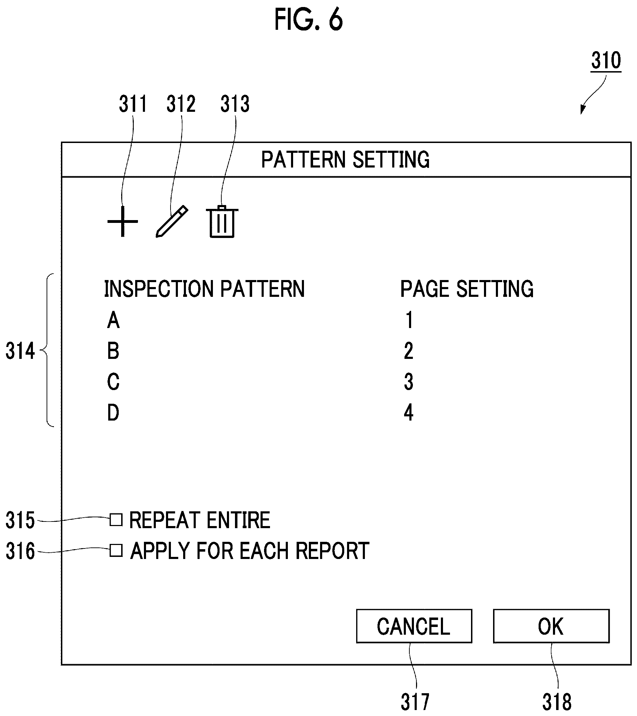

Fig. 6 is a diagram showing a display example of a pattern setting screen 310. The pattern setting screen 310 is displayed on, for example, the monitor of the management server 10 (see Fig. 1). In a case where a monitor is provided in the inspection apparatus 30 (see Fig. 1), the pattern setting screen 310 is displayed on the monitor of the inspection apparatus 30. The pattern setting screen 310 may be displayed on the monitor of the image forming apparatus 20 (see Fig. 1).

The pattern setting screen 310 shown in Fig. 6 is composed of an "add" button 311, an "edit" button 312, a "delete" button 313, a setting field 314, a "repeat entire" button 315, an "apply for each report" button 316, a "cancel" button 317, and an "OK" button 318.

The "add" button 311 is a button used to add the correspondence relationship between the pattern used for the inspection and the page.

The "edit" button 312 is a button used in a case where editing is added to the existing setting.

The "delete" button 313 is a button used for deleting the setting.

The setting field 314 is a region used for setting the correspondence relationship between the pattern used for the inspection and the page. In a case of Fig. 6, it is shown that the "pattern A" is used for the inspection of the first page, the "pattern B" is used for the inspection of the second page, the "pattern C" is used for the inspection of the third page, and the "pattern D" is used for the inspection of the fourth page.

One pattern can also be applied to a plurality of pages. For example, in a case where the pattern D is applied to all pages in and after the fourth page, "4-" is input in a field of "page setting". For example, in a case where the pattern D is applied to the fourth page and the fifth page, "4-5" is input in the field of "page setting".

In the present exemplary embodiment, applying one pattern to a plurality of consecutive pages is referred to as "consecutive page designation".

The "repeat entire" button 315 is a button for issuing an instruction to repeatedly apply the correspondence relationship set in the setting field 314 to all pages of the print job 34A.

In a case of Fig. 6, the "repeat entire" button 315 is in a non-selected state.

In a case where the "repeat entire" button 315 is in a selected state, the "pattern A", the "pattern B", the "pattern C", and the "pattern D" are applied in order to the front page (that is, the first page) to the fourth page of the print job 34A (see Fig. 2), and the "pattern A", the "pattern B", the "pattern C", and the "pattern D" are applied in order to the fifth page to the eighth page. Hereinafter, similarly, the "pattern A", the "pattern B", the "pattern C", and the "pattern D" are applied in order every four pages.

The "apply for each report" button 316 is a button for issuing an instruction to apply the correspondence relationship set in the setting field 314 for each report of the print job 34A.

In a case of Fig. 6, the "apply for each report" button 316 is in a non-selected state.

In a case where the "apply for each report" button 316 is in a selected state, the "pattern A", the "pattern B", the "pattern C", and the "pattern D" are applied from the first page of the report. That is, each pattern is applied in accordance with the page number for each report. In a case where the print job includes a plurality of reports, an "apply for each report" button may be automatically selected.

In a case where the number of pages of the report is less than four, the pattern is applied in order by the number of pages of the report.

On the other hand, in a case where the number of pages of the report is five or more, the pattern is applied up to the fourth page of the report, but the pattern is not applied in and after the fifth page. However, in a case where the "repeat entire" button 315 is also in a selected state, the inspection with each pattern is repeated even in and after the fifth page of the report.

The "cancel" button 317 is a button used for canceling the setting.

The "OK" button 318 is a button used for confirming the setting. The confirmed setting is recorded in the auxiliary storage device 34 (see Fig. 2) as the inspection setting information 34B (see Fig. 2). The inspection setting information 34B is an example of correspondence information. The inspection setting information 34B may be created by the input of the user as described above or may be imported from an external apparatus. The external apparatus may be, for example, the management server 10 (see Fig. 1) or the image forming apparatus 20 (see Fig. 1).

The pattern management unit 303 reads out the inspection setting information 34B associated with the print job 34A (see Fig. 2) in a case of inspecting the printed matter, and provides the inspection setting information 34B to the inspection execution unit 306.

The reference image generation unit 304 (see Fig. 3) is a functional unit that rasterizes the print data corresponding to the print job 34A to generate a reference image for the inspection. In a case of the present exemplary embodiment, the reference image is generated as the entire image of each page. However, the reference image may be generated for each inspection region of the pattern associated with the page that is the inspection target.

The scan image generation unit 305 (see Fig. 3) is a functional unit that acquires the scan image of each page from the scanner 35 (see Fig. 2). The scan image generation unit 305 generates a new scan image each time a new page is brought into the scanner 35. A page number in the scan data and a page number in the report to which the scan image belongs are assigned to the scan image. In this case, the page number may be assigned in accordance with the order in which the pages are scanned, or the page number may be assigned in accordance with the corresponding print data.

The inspection execution unit 306 (see Fig. 3) inspects the printed matter by verifying the reference image corresponding to the page that is the inspection target and the scan image. The verification is executed for the inspection region of the pattern given from the pattern management unit 303. The inspection execution unit 306 outputs a verification result obtained for each inspection region to the page configuration management unit 302 as the inspection result. The verification result is classified into, for example, "match" and "mismatch". In addition, the verification result may include information indicating the reliability of "match" and "mismatch".

### <Processing Operation of Inspection Apparatus>

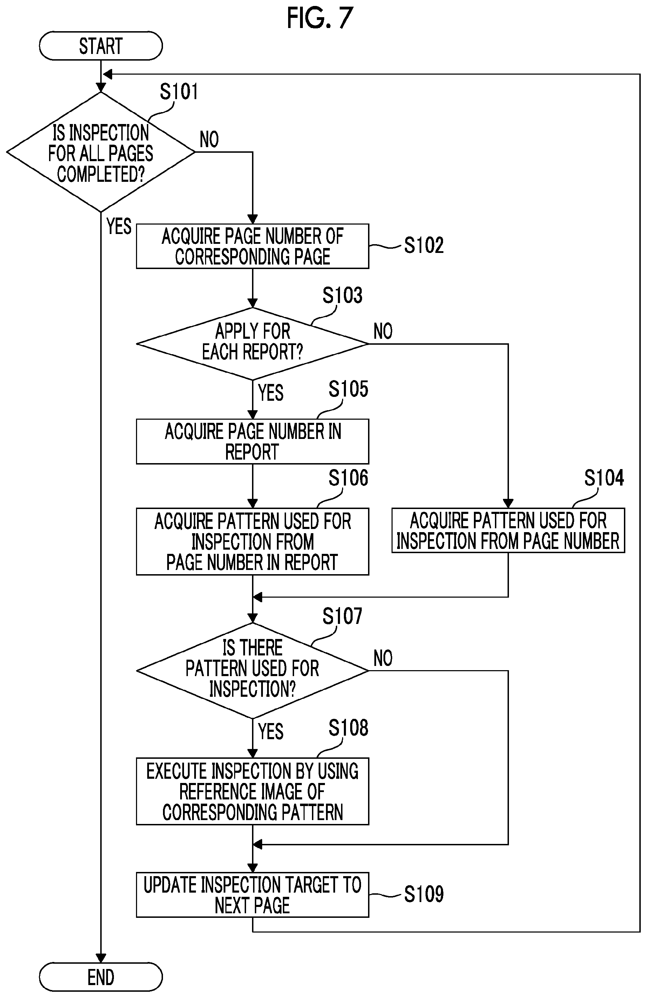

Fig. 7 is an example of a flowchart showing a processing operation executed by the inspection apparatus 30 (see Fig. 1). In Fig. 7, a "step" is represented by a symbol S. The processing operation shown in Fig. 7 is implemented through the execution of the program via the processor 31 (see Fig. 2). In other words, the processing operation shown in Fig. 7 is implemented by cooperation of the functional units shown in Fig. 3.

In a case where the inspection of the printed matter is started, the inspection apparatus 30 determines whether or not the inspection of all pages is completed (step S101). The total number of pages that are the inspection targets is known by analyzing the print job 34A (see Fig. 2).

In a case where there are no pages before the inspection (that is, in a case where the inspection of all pages is completed), a positive result is obtained in step S101. In this case, the inspection apparatus 30 completes the inspection of the printed matter corresponding to the print job 34A (see Fig. 2).

On the other hand, in a case where there is a page before the inspection (that is, in a case where the inspection of all pages is not completed), a negative result is obtained in step S101. In this case, the inspection apparatus 30 acquires the page number of the corresponding page (step S102). The page number here is the serial number starting from the front page (first page) of the print job 34A. The serial number is an example of a page number in the scan data.

The inspection in the present exemplary embodiment is executed in order from the front page of the print job 34A.

In other words, the inspection is executed from a page having the earliest carrying-out order from the image forming apparatus 20 (see Fig. 1).

Therefore, the corresponding page is a page having the smallest serial number starting from the front page among the pages before the inspection or a page having the earliest carrying-out order from the image forming apparatus 20 among the pages before the inspection.

However, in a case where reverse printing is designated in the print job 34A, the corresponding page is a page having the largest serial number starting from the front page of the print job among the pages before the inspection. In other words, in a case where the printing of the pages is started from the last page, the corresponding page is the page having the earliest carrying-out order from the image forming apparatus 20 among the pages before the inspection.

Next, the inspection apparatus 30 determines whether or not to apply the set pattern for each report (step S103). This determination is implemented, for example, by determining whether or not a flag of "apply for each report" in the setting information of the pattern is "valid" or "selected state".

In a case of the setting in which the pattern is not applied for each report, a negative result is obtained in step S103. In this case, the inspection apparatus 30 acquires the pattern to be used for the inspection from the page number (step S104). The page number here is the page number acquired in step S102.

On the other hand, in a case of the setting in which the pattern is applied for each report, a positive result is obtained in step S103. In this case, the inspection apparatus 30 acquires the page number in the report (step S105). That is, the inspection apparatus 30 acquires the page number in the report to which the page that is the inspection target belongs.

Next, the inspection apparatus 30 acquires the pattern to be used for the inspection from the page number in the report (step S106). The page number in the report is calculated based on the page configuration managed by the page configuration management unit 302 (see Fig. 3) and the page number acquired in step S102.

Next, the inspection apparatus 30 determines whether or not there is the pattern used for the inspection (step S107).

As described in the pattern setting screen 310 (see Fig. 6), the application of the set correspondence relationship between the pattern and the page can be set only for one cycle. The setting of only one cycle means that the "repeat entire" button 315 is in a non-selected state.

In addition, it is also possible to perform the repetition for all pages in the report. The report here also includes a case where the number of reports constituting the print job 34A is one.

In addition, one pattern can also be applied to a plurality of consecutive pages. Therefore, there is a possibility that there is an excess or deficiency in the correspondence relationship between the pattern and the page depending on the setting using the inspection setting information 34B (see Fig. 2).

In a case where there is a pattern used for the page that is the inspection target, a positive result is obtained in step S107. In this case, the inspection apparatus 30 executes the inspection using the reference image of the corresponding pattern (step S108). In other words, a quality of the printing is determined for each inspection region, or the presence or absence of a defect in the printed matter is determined. The quality determination may be accompanied by an inspection result of three or more values instead of a binary determination such as good or bad. The inspection result of three or more values represents a degree of three or more values related to the quality.

In a case where there is no pattern to be used for the page that is the inspection target, a negative result is obtained in step S107. In this case, or after the execution of step S108, the inspection apparatus 30 updates the inspection target to a next page (step S109). Then, the inspection apparatus 30 returns to step S101.

As described above, the processing operation described above is repeated until the inspection is completed for all pages of the print job 34A.

### <Inspection Example>

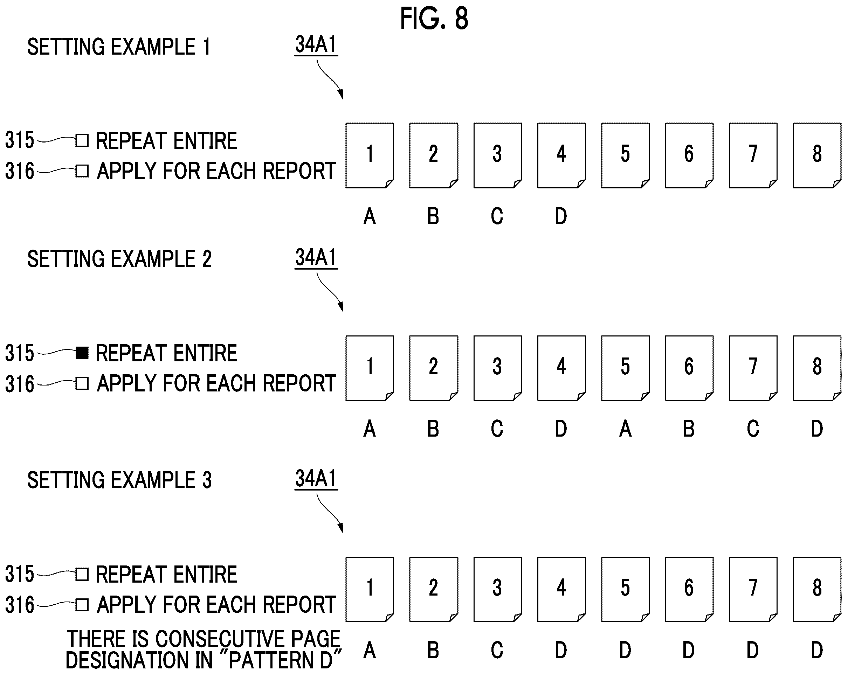

Hereinafter, a difference in the inspection in accordance with a difference in the setting on the pattern setting screen 310 (see Fig. 6) will be described with reference to Figs. 8 to 12. In Figs. 8 to 12, the setting in the pattern setting screen 310 shown in Fig. 6 is assumed.

Fig. 8 is a diagram showing a relationship between a page and a pattern in a setting example 1 to a setting example 3.

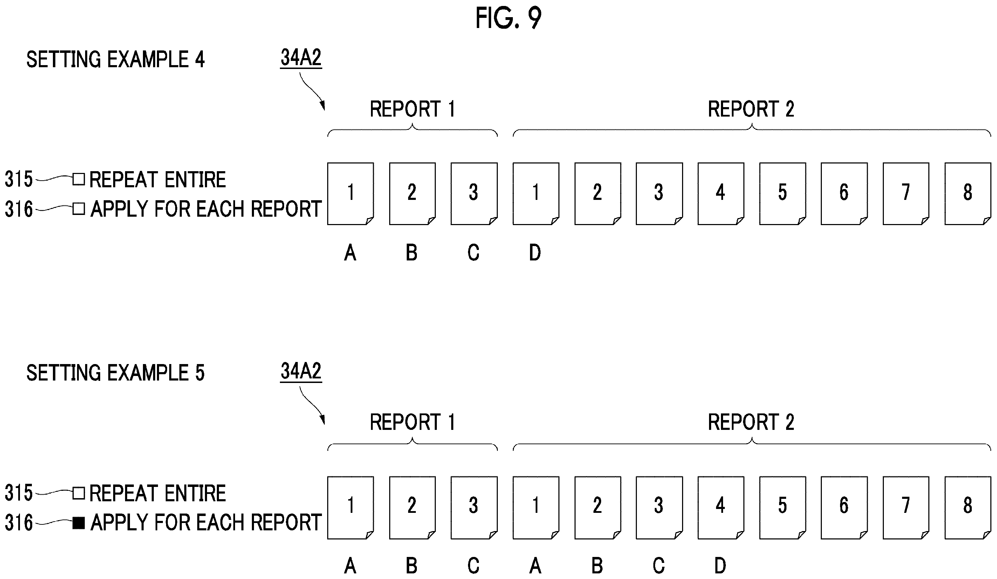

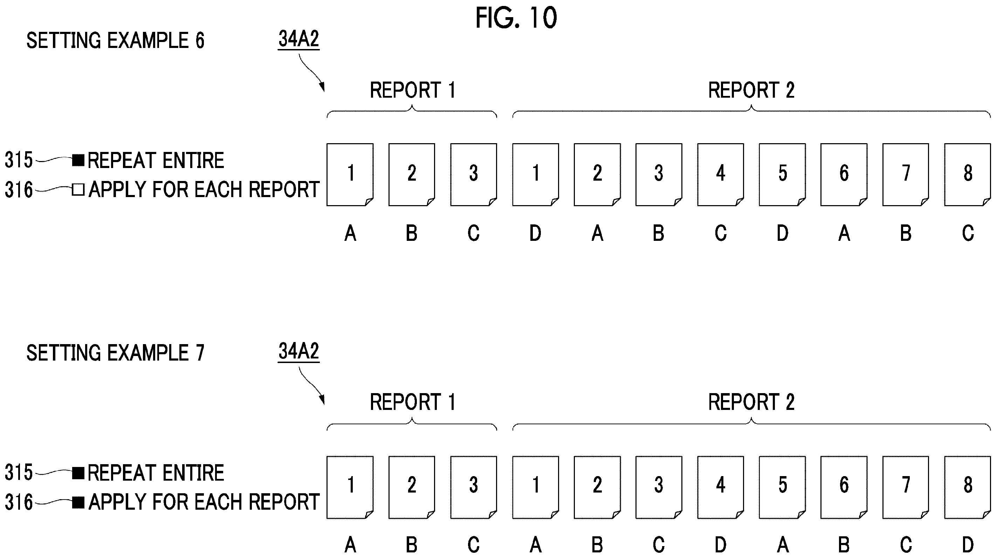

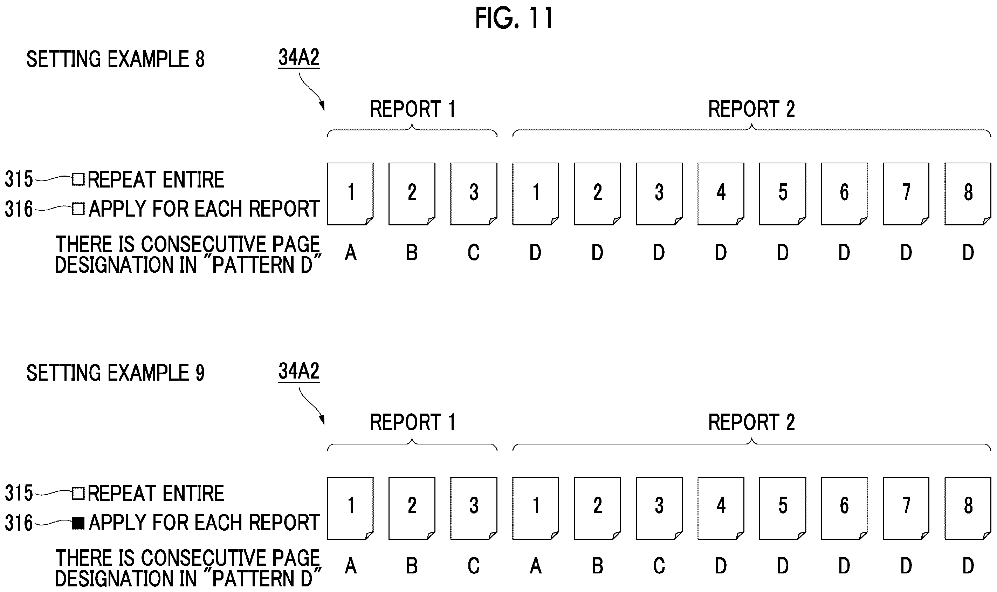

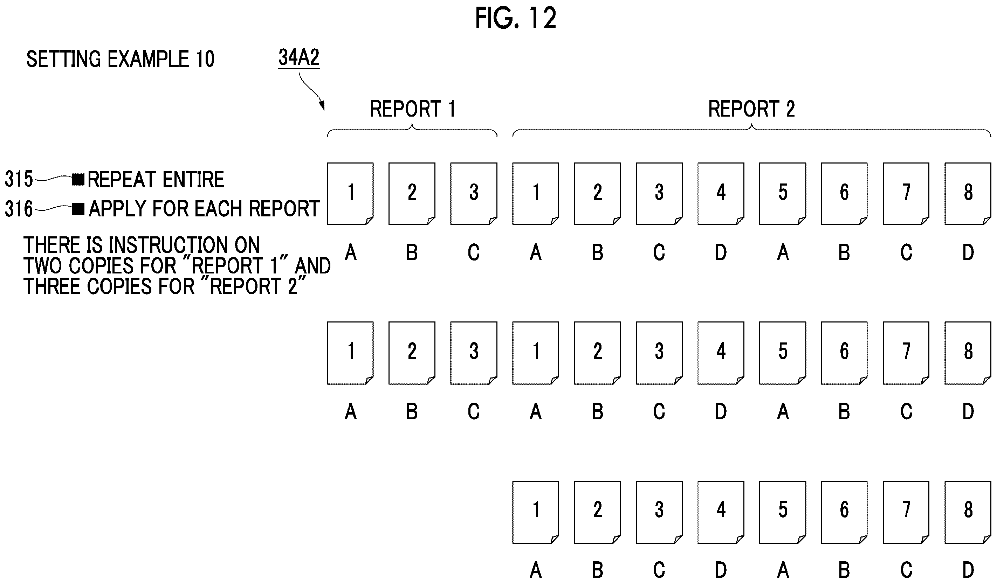

Fig. 9 is a diagram showing a relationship between a page and a pattern in a setting example 4 and a setting example 5. Fig. 10 is a diagram showing a relationship between a page and a pattern in a setting example 6 and a setting example 7. Fig. 11 is a diagram showing a relationship between a page and a pattern in a setting example 8 and a setting example 9. Fig. 12 is a diagram showing a relationship between a page and a pattern in a setting example 10.

In Fig. 8, a case where the report included in the print job 34A (see Fig. 2) is one, that is, a case of the print job 34A1 is assumed.

In Figs. 9 to 12, a case where the number of reports included in the print job 34A (see Fig. 2) is two, that is, a case of the print job 34A2 is assumed. In Figs. 9 to 12, for convenience of description, only two of the three reports are shown.

### <Setting Example 1>

The setting example 1 shows a case where both the "repeat entire" button 315 and the "apply for each report" button 316 are in a non-selected state.

In this case, the "pattern A" is applied to the inspection of the "page 1", the "pattern B" is applied to the inspection of the "page 2", the "pattern C" is applied to the inspection of the "page 3", and the "pattern D" is applied to the inspection of the "page 4". That is, the inspection is only performed up to the fourth page of the print job 34A1, and the fifth and subsequent pages are not inspected.

### <Setting Example 2>

The setting example 2 shows a case where the "repeat entire" button 315 is in a selected state, but the "apply for each report" button 316 is in a non-selected state.

In this case, the inspection with the four patterns is repeatedly applied to the last page.

Specifically, the "pattern A" is applied to the inspection of the "page 1", the "pattern B" is applied to the inspection of the "page 2", the "pattern C" is applied to the inspection of the "page 3", and the "pattern D" is applied to the inspection of the "page 4".

Subsequently, the "pattern A" is applied to the inspection of the "page 5", the "pattern B" is applied to the inspection of the "page 6", the "pattern C" is applied to the inspection of the "page 7", and the "pattern D" is applied to the inspection of the "page 8".

### <Setting Example 3>

The setting example 3 shows a case where both the "repeat entire" button 315 and the "apply for each report" button 316 are in a non-selected state, but there is the consecutive page designation in the "pattern D". Specifically, there is a case where "4-" is set as the page corresponding to the "pattern D".

In this case, the "pattern A" is applied to the inspection of the "page 1", the "pattern B" is applied to the inspection of the "page 2", the "pattern C" is applied to the inspection of the "page 3", and the "pattern D" is applied to the inspection in and after the "page 4".

### <Setting Example 4>

The setting example 4 shows a case where both the "repeat entire" button 315 and the "apply for each report" button 316 are in a non-selected state. However, the print job 34A2 includes two reports.

Therefore, the "pattern A" is applied to the inspection of the "page 1" of the "report 1". Similarly, the "pattern B" is applied to the inspection of the "page 2". Similarly, the "pattern C" is applied to the inspection of the "page 3". The "pattern D" is applied to the inspection of the "page 1" of the "report 2", which is the fourth page of the serial number of the print job 34A2.

The setting example 4 is the same as the setting example 1 in that the "pattern A", the "pattern B", the "pattern C", and the "pattern D" are applied in order from the beginning of the serial number up to the fourth page, but the "pattern D" is applied to the first page of the "report 2".

In a case where the print job 34A is the billing data for a plurality of persons, the arrangement of the pages in the report should basically be the same. Therefore, the "page 1" of the "report 1" and the "page 1" of the "report 2" should be the same layout. In a case of the present exemplary embodiment, the layout up to the "page 4" is common between the reports.

As in the setting example 4, in a case where the pattern is applied in accordance with the serial number starting from the front page of the print job 34A2 for the print job 34A2 including the plurality of reports, a mismatch occurs between the page that is the inspection target and the pattern to be used for the inspection.

### <Setting Example 5>

The setting example 5 shows a case where the "repeat entire" button 315 is in a non-selected state, but the "apply for each report" button 316 is in a selected state.

Therefore, the "pattern A" is applied to the inspection of the "page 1" of the "report 1", the "pattern B" is applied to the inspection of the "page 2" of the "report 1", and the "pattern C" is applied to the inspection of the "page 3" of the "report 1". Since the "page 4" is not present in the "report 1", the "pattern D" is not applied.

Then, the "pattern A" is applied to the inspection of the "page 1" of the "report 2", the "pattern B" is applied to the inspection of the "page 2", the "pattern C" is applied to the inspection of the "page 3", and the "pattern D" is applied to the inspection of the "page 4".

In a case of the setting example 5, the "pattern A" is applied to the inspection of the "page 1" of the "report 1" and the "report 2", and there is no mismatch in the pattern used for the inspection. The same applies to other pages. The page numbers "1" to "3" of the "report 1" are examples of the page numbers in the first page group, and the page numbers "1" to "8" of the "report 2" are examples of the page numbers in the second page group.

### <Setting Example 6>

The setting example 6 shows a case where the "repeat entire" button 315 is in a selected state, but the "apply for each report" button 316 is in a non-selected state. The layout of the "report 2" is repeated every four pages.

The pattern is also applied to the print job 34A2 including the two reports in accordance with the serial number starting from the front page of the print job 34A2.

Specifically, the "pattern A" is applied to the inspection of the "page 1" of the "report 1". Similarly, the "pattern B" is applied to the inspection of the "page 2". Similarly, the "pattern C" is applied to the inspection of the "page 3". The "pattern D" is applied to the inspection of the "page 1" of the "report 2".

In addition, the "pattern A" is applied to the inspection of the "page 2" of the "report 2", the "pattern B" is applied to the inspection of the "page 3" of the "report 2", the "pattern C" is applied to the inspection of the "page 4" of the "report 2", and the "pattern D" is applied to the inspection of the "page 5" of the "report 2".

In addition, the "pattern A" is applied to the inspection of the "page 6" of the "report 2", the "pattern B" is applied to the inspection of the "page 7" of the "report 2", and the "pattern C" is applied to the inspection of the "page 8" of the "report 2".

In this case, the inspection of each page of the "report 2" is executed with a mismatched pattern.

### <Setting Example 7>

The setting example 7 shows a case where both the "repeat entire" button 315 and the "apply for each report" button 316 are in a selected state. The layout of the "report 2" is repeated every four pages.

Therefore, the "pattern A" is applied to the inspection of the "page 1" of the "report 1", the "pattern B" is applied to the inspection of the "page 2" of the "report 1", and the "pattern C" is applied to the inspection of the "page 3" of the "report 1".

Similarly, the "pattern A" is applied to the inspection of the "page 1" of the "report 2", the "pattern B" is applied to the inspection of the "page 2" of the "report 2", and the "pattern C" is applied to the inspection of the "page 3" of the "report 2". In addition, the "pattern D" is applied to the inspection of the "page 4" of the "report 2". Hereinafter, the "pattern A", the "pattern B", the "pattern C", and the "pattern D" are applied to each page in order.

Therefore, there is no mismatch in the pattern used for the inspection.

### <Setting Example 8>

The setting example 8 shows a case where both the "repeat entire" button 315 and the "apply for each report" button 316 are in a non-selected state. However, the setting example 8 is different from the setting example 4 (see Fig. 9) in that there is the consecutive page designation in the "pattern D". It is assumed that the layouts in and after the page 4 page of the "report 2" are the same.

Therefore, the pattern is also applied to the print job 34A2 including the two reports in accordance with the serial number starting from the front page of the print job 34A2.

Specifically, the "pattern A" is applied to the inspection of the "page 1" of the "report 1". Similarly, the "pattern B" is applied to the inspection of the "page 2". Similarly, the "pattern C" is applied to the inspection of the "page 3". The "pattern D" is applied to the inspection of the "page 1" of the "report 2".

Then, the "pattern D" is applied to the inspection of all pages in and after the "page 2" of the "report 2".

In this case, the "pattern D" is applied to the inspection of all pages of the "report 2", and the inspection is executed with a mismatched pattern on most of the pages corresponding to the "report 2".

### <Setting Example 9>

The setting example 9 shows a case where the "repeat entire" button 315 is in a non-selected state, but the "apply for each report" button 316 is in a selected state. However, the setting example 9 is different from the setting example 5 (see Fig. 9) in that there is the consecutive page designation in the "pattern D". It is assumed that the layouts in and after the page 4 page of the "report 2" are the same.

Therefore, the "pattern A" is applied to the inspection of the "page 1" of the "report 1", the "pattern B" is applied to the inspection of the "page 2" of the "report 1", and the "pattern C" is applied to the inspection of the "page 3" of the "report 1".

Similarly, the "pattern A" is applied to the inspection of the "page 1" of the "report 2", the "pattern B" is applied to the inspection of the "page 2" of the "report 2", and the "pattern C" is applied to the inspection of the "page 3" of the "report 2". In addition, the "pattern D" is applied to the inspection of all pages in and after the "page 4" of the "report 2".

In a case of the setting example 9, the number of pages of the "report 1" is three, but in a case where the number of pages is four or more, the same inspection as the "report 2" is executed.

In any case, even in the print job 34A2 including the two reports, there is no mismatch in the pattern used for the inspection.

### <Setting Example 10>

The setting example 10 shows a case where both the "repeat entire" button 315 and the "apply for each report" button 316 are in a selected state. However, the setting example 10 is different from the setting example 7 (see Fig. 10) in that the number of copies is set differently for each report. The layout of the "report 2" is repeated every four pages.

In this case, the inspection apparatus 30 acquires the setting of the number of copies for each report through the analysis of the print job 34A (see Fig. 2). In a case where there is a difference in the number of copies between the reports, the inspection apparatus 30 manages the pattern used for the inspection in accordance with the number of copies of the report, by the serial number starting from the front page of the corresponding report.

In a case of the setting example 10, there is an instruction of two copies for the "report 1" and three copies for the "report 2".

Even in this case, the "pattern A" can be applied to the "page 1" of the "report 2" due to the "apply for each report" button 316 in a selected state.

In a case where the "apply for each report" button 316 is in a non-selected state, as in the setting example 6 (see Fig. 10), the "pattern D" is applied to the "page 1" of the "report 2", and a correct inspection result cannot be obtained.

### <Summary>

As described above, in the inspection apparatus 30 (see Fig. 1) described in the present exemplary embodiment, the setting in which the pattern used for the inspection of the printed matter is applied for each report can be made.

Therefore, even in the print job 34A2 (see Fig. 2) having a plurality of reports, the setting of the correspondence relationship between the pattern and the page can be commonly applied to all the reports. In other words, by using the inspection apparatus 30 described in the present exemplary embodiment, the inspection of the printed matter in which the pages with the same layout appear at irregular periods may be handled.

### <Other Exemplary Embodiments>

(1) While the exemplary embodiment of the present invention has been described above, the technical scope of the present invention is not limited to the scope of the above-described exemplary embodiment. According to the claims, the above-described exemplary embodiment to which various modifications or improvements are added also falls within the technical scope of the present invention.
(2) In the above-described exemplary embodiment, a case where the image forming apparatus 20 and the inspection apparatus 30 are separate housings has been assumed. However, the image forming apparatus 20 and the inspection apparatus 30 may have an integrated configuration.
(3) In the above-described exemplary embodiment, the management server 10 has been described as an independent apparatus. However, the management server 10 may be configured integrally with the image forming apparatus 20 or may be configured integrally with the inspection apparatus 30.
(4) The printed matter inspection system 1 in the above-described exemplary embodiment may be implemented by a single apparatus or may be implemented by a plurality of apparatuses.
(5) In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments.

The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage).

The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The present invention is also applicable to a program and a program product.

### <Supplementary Note>

(((1))) An information processing system comprising:
   a processor configured to:
   acquire correspondence information in which a page number assigned to image data and a region in the image data are associated with each other;
   acquire scan data obtained by reading a printed matter; and
   in a case where the scan data includes a first page group and a second page group,
   set a region in which an inspection is to be executed in a scan image included in the first page group based on a page number in the first page group, which is assigned to the scan image included in the first page group, and the correspondence information, and
   set a region in which an inspection is to be executed in a scan image included in the second page group based on a page number in the second page group, which is assigned to the scan image included in the second page group, and the correspondence information.
(((2))) The information processing system according to (((1))), wherein the processor is configured to:
   acquire a setting of the number of copies of at least any one of the first page group or the second page group; and
   set the region in which the inspection is to be executed in the scan image included in at least any one of the first page group or the second page group based on the acquired setting of the number of copies.
(((3))) The information processing system according to (((2))), wherein the processor is configured to:
   in a case where the scan data does not include the first page group and the second page group,
   set a region in which an inspection is to be executed in a scan image included in the scan data based on a page number in the scan data, which is assigned to the scan image included in the scan data, and the correspondence information.
(((4))) The information processing system according to (((1))), wherein the processor is configured to:
   in a case where the scan data does not include the first page group and the second page group,
   set a region in which an inspection is to be executed in a scan image included in the scan data based on a page number in the scan data, which is assigned to the scan image included in the scan data, and the correspondence information.
(((5))) An information processing system comprising:
   a processor configured to:
   acquire correspondence information in which a page number assigned to image data and a region in the image data are associated with each other;
   acquire scan data obtained by reading a printed matter and including a first page group and a second page group;
   receive an input of a user; and
   in a case of setting a region in which an inspection is to be executed in a scan image included in the scan data, vary whether to set the region in which the inspection is to be executed, based on a page number in the scan data and the correspondence information or to set the region in which the inspection is to be executed, based on a page number in the first page group or the second page group and the correspondence information, in accordance with the received input of the user.
(((6))) The information processing system according to any one of (((1))) to (((5))),
   wherein a print job corresponding to the printed matter is a print job in a data stream format, a print job in which a plurality of print jobs are combined, a print job accompanied by switching of paper in units of delimiters in data, or a print job of a document file including a bookmark structure.
(((7))) A program causing a computer to implement:
   a function of acquiring correspondence information in which a page number assigned to image data and a region in the image data are associated with each other;
   a function of acquiring scan data obtained by reading a printed matter; and
   a function of, in a case where the scan data includes a first page group and a second page group, setting a region in which an inspection is to be executed in a scan image included in the first page group based on a page number in the first page group, which is assigned to the scan image included in the first page group, and the correspondence information, and setting a region in which an inspection is to be executed in a scan image included in the second page group based on a page number in the second page group, which is assigned to the scan image included in the second page group, and the correspondence information.

With the inspection apparatus according to (((1))), an inspection region may be set for a printed matter in which pages with the same layout appear at irregular periods, unlike a case where a pattern of an inspection region used for inspecting a printed matter is switched only by a serial number starting from a front page of the printed matter.

With the inspection apparatus according to (((2))), the number of copies may be set for each delimiter on the data included in the print job.

With the inspection apparatus according to (((3))), the printed matter may be inspected even in a case where a plurality of page groups are not included.

With the inspection apparatus according to (((4))), the printed matter may be inspected even in a case where the plurality of page groups are not included.

With the inspection apparatus according to (((5))), the inspection region may be set for the printed matter in which the pages with the same layout appear at irregular periods, unlike a case where a pattern of the inspection region used for inspecting the printed matter is switched only by the serial number starting from the front page of the printed matter.

With the inspection apparatus according to (((6))), the inspection of the printed matter corresponding to various print jobs including the delimiter may be performed.

With the program according to (((7))), the inspection region may be set for the printed matter in which the pages with the same layout appear at irregular periods, unlike a case where a pattern of the inspection region used for inspecting the printed matter is switched only by the serial number starting from the front page of the printed matter.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: printed matter inspection system
10: management server
20: image forming apparatus
30: inspection apparatus
40: network

## Claims

1. An information processing system comprising:
a processor configured to:
acquire correspondence information in which a page number assigned to image data and a region in the image data are associated with each other;
acquire scan data obtained by reading a printed matter; and
in a case where the scan data includes a first page group and a second page group,
set a region in which an inspection is to be executed in a scan image included in the first page group based on a page number in the first page group, which is assigned to the scan image included in the first page group, and the correspondence information, and
set a region in which an inspection is to be executed in a scan image included in the second page group based on a page number in the second page group, which is assigned to the scan image included in the second page group, and the correspondence information.

2. The information processing system according to claim 1, wherein the processor is configured to:
acquire a setting of the number of copies of at least any one of the first page group or the second page group; and
set the region in which the inspection is to be executed in the scan image included in at least any one of the first page group or the second page group based on the acquired setting of the number of copies.

3. The information processing system according to claim 2, wherein the processor is configured to:
in a case where the scan data does not include the first page group and the second page group,
set a region in which an inspection is to be executed in a scan image included in the scan data based on a page number in the scan data, which is assigned to the scan image included in the scan data, and the correspondence information.

4. The information processing system according to claim 1, wherein the processor is configured to:
in a case where the scan data does not include the first page group and the second page group,
set a region in which an inspection is to be executed in a scan image included in the scan data based on a page number in the scan data, which is assigned to the scan image included in the scan data, and the correspondence information.

5. An information processing system comprising:
a processor configured to:
acquire correspondence information in which a page number assigned to image data and a region in the image data are associated with each other;
acquire scan data obtained by reading a printed matter and including a first page group and a second page group;
receive an input of a user; and
in a case of setting a region in which an inspection is to be executed in a scan image included in the scan data, vary whether to set the region in which the inspection is to be executed, based on a page number in the scan data and the correspondence information or to set the region in which the inspection is to be executed, based on a page number in the first page group or the second page group and the correspondence information, in accordance with the received input of the user.

6. The information processing system according to any one of claims 1 to 5,
wherein a print job corresponding to the printed matter is a print job in a data stream format, a print job in which a plurality of print jobs are combined, a print job accompanied by switching of paper in units of delimiters in data, or a print job of a document file including a bookmark structure.

7. A program causing a computer to implement:
a function of acquiring correspondence information in which a page number assigned to image data and a region in the image data are associated with each other;
a function of acquiring scan data obtained by reading a printed matter; and
a function of, in a case where the scan data includes a first page group and a second page group, setting a region in which an inspection is to be executed in a scan image included in the first page group based on a page number in the first page group, which is assigned to the scan image included in the first page group, and the correspondence information, and setting a region in which an inspection is to be executed in a scan image included in the second page group based on a page number in the second page group, which is assigned to the scan image included in the second page group, and the correspondence information.

8. An information processing method comprising:
acquiring correspondence information in which a page number assigned to image data and a region in the image data are associated with each other;
acquiring scan data obtained by reading a printed matter; and
in a case where the scan data includes a first page group and a second page group, setting a region in which an inspection is to be executed in a scan image included in the first page group based on a page number in the first page group, which is assigned to the scan image included in the first page group, and the correspondence information, and setting a region in which an inspection is to be executed in a scan image included in the second page group based on a page number in the second page group, which is assigned to the scan image included in the second page group, and the correspondence information.
